Europäisches Patentamt

European Patent Office

Office européen des brevets

(11) Veröffentlichungsnummer: **0 193 717**
**B1**

(12) **EUROPÄISCHE PATENTSCHRIFT**

(45) Veröffentlichungstag der Patentschrift: **04.04.90**

(51) Int. Cl.⁵: **C 09 D 183/04**

(21) Anmeldenummer: **86100630.2**

(22) Anmeldetag: **18.01.86**

(54) Beschichtungsmittel für Entspiegelungsschichten und Verfahren zu seiner Herstellung.

(30) Priorität: **06.02.85 DE 3503957**

(43) Veröffentlichungstag der Anmeldung:
**10.09.86 Patentblatt 86/37**

(45) Bekanntmachung des Hinweises auf die
Patenterteilung:
**04.04.90 Patentblatt 90/14**

(84) Benannte Vertragsstaaten:
**AT BE CH DE FR GB IT LI NL SE**

(56) Entgegenhaltungen:
**EP-A-0 065 388**
**US-A-3 986 997**

(73) Patentinhaber: **GfO Gesellschaft für
Oberflächentechnik m.b.H.
Klarenbergstrasse 79 Postfach 12 40
D-7070 Schwäbisch Gmünd (DE)**

(73) Patentinhaber: **Degussa Aktiengesellschaft
Weissfrauenstrasse 9
D-6000 Frankfurt am Main 1 (DE)**

(72) Erfinder: **Aldinger, Werner, Dr.
Friedensstrasse 11
D-7263 Bad Liebenzell/M. (DE)**
Erfinder: **Pöllmann, Richard
Danzingerstrasse 13
D-7076 Waldstetten (DE)**
Erfinder: **Eisenmenger, Edith
Senefelderstrasse 43
D-6050 Offenbach/M. (DE)**

Courier Press, Leamington Spa, England.

**Beschreibung**

Die Erfindung betrifft ein Beschichtungsmittel für Entspiegelungsschichten auf durchsichtigen Flächen aus Glas oder Kunststoffen, insbesondere für Entspiegelungsschichten auf Bildschirmen, aus einem thermisch härtbaren Lack und einem feinteiligen Pigment auf Kieselsäurebasis, und ein Verfahren zu seiner Herstellung.

Bildschirmgeräte, wie sie in der Datenverarbeitung, in der Büroorganisation oder in der Computertechnik Verwendung finden, Fernsehbildschirme, Skalenabdeckungen an Phonogeräten, Instrumentenabdeckungen in Automobilen und sonstige durchsichtige Flächen aus Glas oder Kunststoffen weisen meist glänzende Oberflächen auf, von denen störende Lichtreflexionen ausgehen, die das visuelle Erkennen von Informationen erschweren und zu gesundheitlichen Schäden führen können. Es ist daher wichtig, solche Flächen zu entspiegeln, ohne daß die Durchsicht wesentlich beeinträchtigt wird.

Es sind bisher eine Reihe Methoden bekanntgeworden, Bildschirme weitgehend zu entspiegeln. Eine Möglichkeit besteht im Aufbringen einer dünnen Schicht eines transparenten Lackes auf dem Bildschirm. Die hierfür verwendeten Lacke sind jedoch nicht ausreichend beständig gegenüber dem chemischen und mechanischen Angriff von Putzmitteln.

In der EP—A—0 102 830 wird ein Beschichtungsmittel für Entspiegelungsschichten beschrieben, das aus einem durch UV-Strahlung aushärtbaren Acrylatlack besteht, der ein feinteiliges festes Polyacrylat enthält. Solche Entspiegelungsschichten besitzen auf verschiedenen Unterlagen nur eine ungenügende Haftfestigkeit und sind auch nicht abriebbeständig genug.

Aus der EP—A—0 085 190 sind Beschichtungsmittel für Entspiegelungsschichten bekannt, die aus einem Firnis und Silikat oder eine Kieselsäure enthaltenden wässrigen Dispersionen bestehen. Diese Beschichtungsmittel sind allerdings nicht lagerfähig, sondern dürfen erst unmittelbar vor ihrer Verwendung hergestellt werden.

Ebenfalls bekannt sind Lacke, in denen feine Teilchen aus Siliziumdioxid, Titandioxid oder Aluminium dispergiert sind (EP—A—0 102 830). Jedoch sind auch diese Entspiegelungsmittel nicht lagerfähig, da sich die Teilchen mit der Zeit absetzen und dadurch unterschiedliche Entspiegelungsschichten liefern.

In der US—PS—3 986 997 werden abriebbeständige Schichten beschrieben, basierend auf einer Dispersion von kolloidalem Siliziumdioxid und Polysiloxanen in Alkohol-Wasser-Gemischen. Eine Entspiegelung erfolgt mit diesen Schichten nur in geringen Maßen.

Es war daher Aufgabe der vorliegenden Erfindung, ein Beschichtungsmittel für Entspiegelungsschichten auf durchsichtigen Flächen aus Glas oder Kunststoffen zu entwickeln, insbesondere für Entspiegelungsschichten auf Bildschirmen, aus einem thermisch härtbaren Lack und einem feinteiligen Pigment auf Kieselsäurebasis, das lagerungsbeständig ist und haftfeste, abrieb- und chemikalienbeständige Entspiegelungsschichten liefert, die störende Reflexionen entscheidend mindern, ohne die Durchsicht wesentlich zu beeinträchtigen. Außerdem sollte ein Verfahren zur Herstellung solcher Beschichtungsmittel gefunden werden.

Diese Aufgabe wurde erfindungsgemäß dadurch gelöst, daß als Lack ein Polysiloxanlack, bestehend aus Hydroylseprodukten von Trialkoxysilanen und/oder Teilkondensaten von Trisalanolen, gelöst in niederen aliphatischen Alkoholen und als Pigment ein Gemisch aus einer thermisch im Lichtbogen bei etwa 3500°C oder durch Flammenhydrolyse hergestellten Kieselsäure und einer durch Umsetzung der Silanolgruppen hydrophobierten thermisch hergestellten Kieselsäure verwendet wird, wobei die Kieselsäuren insgesamt in Mengen von 0,5 bis 15 Gew.% im Lack vorhanden sind und die hydrophobierte Kieselsäure 5 bis 40 Gew.% der Gesamtkieselsäure ausmacht.

Vorzugsweise enthält der Polysiloxanlack kolloidales Siliziumdioxid. Besonders bewährt hat sich ein Polysiloxanlack, dessen Feststoffgehalt nach DIN 53216, 20 bis 30% beträgt und aus kolloidalem Siliziumdioxid und Teilkondensaten von Trisalanolen besteht.

Die Feststoffbestandteile der Polysiloxanlacke enthalten zumindest zum Teil stets freie Hydroxylgruppen, über die sie bei Anwendung erhöhter Temperatur durch Kondensation vernetzt werden können. Die Zusammensetzung der im Lack vorhandenen Lösungsmittel muß dem jeweiligen Substrat (anorganische und organische Gläser) angepasst werden, um eine gute Haftfestigkeit der Entspiegelungsschichten zu erzielen. Bevorzugt werden hierfür ein- und zweiwertige aliphatische Alkohole eingesetzt.

Die thermisch hergestellten Kieselsäuren werden im Lichtbogen bei etwa 3500°C oder durch Flammenhydrolyse bei 550 bis 1250°C gewonnen. Nicht geeignet sind durch chemische Fällung erzeugte Kieselsäuren.

Diese thermisch hergestellten Kieselsäuren besitzen im Herstellungszustand BET-Oberflächen von 150 bis 330 m²/g und mittlere Primärteilchengrößen von 6 bis 40 nm. Die Sekundäraggregate weisen Durchmesser von 2 bis 15 µm auf.

Die erforderlichen hydrophoben Kieselsäuren werden aus hydrophilen, durch Flammenhydrolyse erzeugten Kieselsäuren durch Umsetzung der Silanolgruppen mit beispielsweise Dimethyldichlorsilan hergestellt.

Die Kieselsäuren liegen im Polysiloxanlack in Mengen von 0,5 bis 15 Gew.%, insbesondere in Mengen von 1 bis 8 Gew.% vor, wobei die hydrophobierte Kieselsäure 5 bis 40%, insbesondere 8 bis 30% der Gesamtkieselsäure ausmacht. Die hydrophobierte Kieselsäure ist dafür verantwortlich, daß die thermisch hegestellten Kieselsäuren im Polysiloxanlack ein gutes Schwebeverhalten zeigen und damit ein Absetzen in Vorratsbehältern auch während längerer Verarbeitungszeiten verhinhert wird.

Um eine deutliche Reduzierung der Spiegelreflexe als auch eine Beibehaltung der Bildsschärfe und hohe Transmissionswerte bei guter Oberflächenglätte zu erreichen, muß die Kieselsäure in fein verteilter Form vorliegen. Bewährt haben sich Korngrößen <1 µm, wobei die Körnigkeit mit einem Grindometer nach DIN 53203 gemessen wird.

Die Herstellung der Beschichtungsmittel erfolgt daher vorzugsweise derart, daß die Kieselsäuren mit einem Teil des Polysiloxanlackes solange gemahlen werden, bis die Körnigkeit des pastösen Gemisches, gemessen mit einem Grindometer, einen Wert von <1 µm erreicht hat, und anschließend mit dem Rest des Polysolixanlackes versetzt wird.

Vorteilhafterweise verwendet man hierzu eine Kugelmühle. Nach einer Dispergierzeit von 30 bis 50 Stunden erhält man Lacke, die Entspiegelungsschichten mit hoher Bildschärfe liefern.

Zur Erzielung hoher Leuchtdichten kann den Beschichtungsmitteln eine färbende Substanz zugesetzt werden, die außerdem so gewählt werden kann, daß eine optische Anpassung der Entspiegelungsschicht an die Farbe der Unterlage erfolgt.

Die Beschichtungsmittel können auf die zu entspiegelnden Unterlagen nach den üblichen technischen Verfahren aufgebracht werden, wie beispielsweise durch Tauchen, Fluten oder Spritzen. Zur besseren Verarbeitung kann dem Beschichtungsmittel nach eine Silikonharzlösung zugesetzt werden. Durch Erwärmen auf beispielsweise 80 bis 120°C entstehen Entspiegelungsschichten, die eine ausgezeichnete Reflexminderung unter Beibehaltung der Bildschärfe und eines hohen Transmissionswertes zeigen. Außerdem sind sie beständig gegen Säuren, Laugen und viele organische Lösungsmittel, wie Aceton, Xylol oder Isopropanol, besitzen antistatische Oberflächeneigenschaften und sind beständig gegen mechanischen Abrieb. Die Schichten haben normalerweise eine Dicke von 3 bis 10 µm.

Folgende Beispiele sollen das erfindungsgemäße Beschichtungsmittel näher erläutern:

1. In einer Kugelmühle wird eine Mischung aus 129,75 Gewichtsteilen eines Polysiloxanlackes (SICRALAN MRL), 14,70 Gewichtsteilen einer thermisch hergestellten Kieselsäure (TS 100) und 5,55 Gewichtsteilen hydrophobierter Kieselsäure (AEROSIL R 972) mit ca. 400 g Porzellankugeln von ca. 1,5 cm Durchmesser während 50 Stunden bei 90 Umdrehungen pro Minute zu einer Paste dispergiert, die einen Grindometerwert <1 µm aufweist. Aus 9,5 Gewichtsteilen dieser Paste, 89,5 Gewichtsteilen Polysiloxanlack (SICRALAN MRL) und 1 Gewichtsteil eines gelösten Silikonharzes (BYK 301) wird mit einem Flügelrührer (2000 U/min) in fünf Minuten eine Beschichtungsmasse hergestellt, die auf glasklare Acrylglasscheiben durch Tauchen aufgebracht, während 2 bis 3 Minuten abgelüftet und 60 Minuten bei 80°C getrocknet wird. Die Schichtdicke beträgt 6 µm.

Tabelle I zeigt einige Eigenschaften derart beschichteter und unbeschichteter Acrylglasscheiben.

Tabelle I

| Eigenschaften | Acrylglas beschichtet | Acrylglas unbeschichtet |
|---|---|---|
| Reflektormeterwert (nach DIN 67530) $20^{\circ}$ $60^{\circ}$ $85^{\circ}$ | 48,5 76,5 85,1 | 112 143 134 |
| Transparenz (nach Länge, mit Grünfilter VG9) | 90,6 % | 92,5 % |
| Abriebtest nach dem Taberverfahren (DIN 52347) Abriebzahl nach 100 Umdrehungen | 7 | 32 |
| Haftfestigkeit (DIN 53 151) | 0-1 | - |
| Alterungsbeständigkeit (Xenontest ohne Veränderung) | 3000 Stunden | - |

2. In der gleichen Kugelmühle wie im Beispiel 1 wird eine Mischung aus 114,3 Gewichtsteilen eines Polysiloxanlackes (SICRALAN MRL), 25,95 Gewichtsteilen thermisch hergestellter Kieselsäure (TT 600) und 9,75 Gewichtsteilen hydrophobierter Kieselsäure (AEROSIL R 972) während 40 Stunden mit 60 Umdrehungen pro Minute zu einer Paste mit einem Grindometerwert <1 µm dispergiert. 24,4 Gewichtsteile dieser Paste werden mit 74,6 Gewichtsteilen des Polysiloxanlackes und 1 Gewichtsteil einer Silikonharzlösung versetzt. Mit diesem Beschichtungsmittel wird ein organisches Glas auf Polycarbonatbasis beschichtet und die Schicht 1 Stunde bei 120° getrocknet.

Die Tabelle II zeigt einige Eigenschaften derart beschichteter und unbeschichteter Polycarbonatscheiben, wobei die Werte analog Tabelle I bestimmt wurden.

4

## Tabelle II

| Eigenschaften | Polycarbonat beschichtet | Polycarbonat unbeschichtet |
|---|---|---|
| Reflektometerwert | | |
| 20° | 13,3 | 102 |
| 60° | 24,8 | 151 |
| 85° | 83,4 | 151 |
| Transparenz | 86,0 % | 90,5 % |
| Abriebtest | 10 | 36 |
| Haftfestigkeit | 0-1 | - |
| Alterungsbeständigkeit | 1000 Stunden | - |

3. In einer Kugelmühle gemäß Beispiel 1 und 2 wird eine Mischung aus 129,75 Gewichtsteilen Polysiloxanlack, 14,70 Gewichtsteilen einer thermischen Kieselsäure (TK 900) und 5,55 Gewichtsteilen einer hydrophobierten Kieselsäure zu einer Paste dispergiert, 16,0 Gewichtsteile dieser Paste mit 84 Gewichtsteilen Polysiloxanlack versetzt und dieses Beschichtungsmittel nach dem Homogenisieren auf Acrylglasscheiben aufgebracht.

Die Tabelle III zeigt einige Eigenschaftswerte

## Tabelle III

| Eigenschaften | Acrylglas beschichtet | Acrylglas unbeschichtet |
|---|---|---|
| Reflektormeterwert | | |
| 20° | 44,0 | 112,0 |
| 60° | 75,0 | 143,5 |
| 85° | 89,5 | 134,5 |
| Transparenz | 91,0 % | 92,5 % |

4. Ein Beschichtungsmittel der Zusammensetzung gemäß Beispiel 1 wird auf ein anorganisches Glas aufgebracht und 60 Minuten bei 110 bis 120°C getrocknet. Die Schicht besitzt einen Gitterschnittkennwert nach DIN 53151 von 1.

**Patentansprüche**

1. Beschichtungsmittel für Entspiegelungsschichten auf durchsichtigen Flächen aus Glas und Kunststoffen, insbesondere für Entspiegelungsschichten auf Bildschirmen, aus einem thermisch härtbaren Lack und einem feinteiligen Pigment auf Kieselsäurebasis, dadurch gekennzeichnet, daß als Lack ein Polysiloxanlack bestehend aus Hydrolyseprodukten von Trialkoxysilanen und/oder Teilkondensaten von Trisilanolen, gelöst in niederen aliphatischen Alkoholen, und als Pigment ein Gemisch aus einer thermisch im Lichtbogen bei etwa 3500°C oder durch flammenhydrolyse bei 550 bis 1250°C hergestellten Kieselsäure und einer durch Umsetzung der Silanolgruppen hydrophobierten thermisch hergestellten Kieselsäure verwendet wird, wobei die Kieselsäuren insgesamt in Mengen von 0,5 bis 15 Gew.% im Lack vorhanden sind und die hydrophobierte Kieselsäure 5 bis 40 Gew.% oder Gesamtkieselsäure ausmacht.

2. Beschichtungsmittel nach Anspruch 1, dadurch gekennzeichnet, daß der Polysiloxanlack kolloidales Siliziumdioxid enthält.

3. Beschichtungsmittel nach Anspruch 1 und 2, dadurch gekennzeichnet, daß der Feststoffgehalt des Polysiloxanlackes nach DIN 53216, 20 bis 30% beträgt und aus kolloidalem Siliziumdioxid und Teilkondensaten von Trisilanolen besteht.

4. Beschichtungsmittel nach Anspruch 1 bis 3, dadurch gekennzeichnet, daß die Kieselsäuren eine Korngröße ≤1 µm besitzen.

5. Verfahren zur Herstellung von Beschichtungsmitteln aus Polysiloxanlacken und thermisch hergestellten Kieselsäuren gemäß Anspruch 1 bis 4, dadurch gekennzeichnet, daß die Kieselsäuren mit einem Teil des Lackes solange gemahlen werden, bis die Körnigkeit des pastösen Gemisches gemessen mit einem Grindometer, einen Wert von <1 µm erreicht hat, und anschließend mit dem Rest des Polysiloxanlackes versetzt wird.

## Revendications

1. Produit de revêtement pour couches antireflet sur des surfaces transparentes de verre ou matières plastiques, en particulier pour couches antireflet sur des écrans, composé d'un vernis thermodurcissable et d'un pigment finement divisé à base d'acide silicique, caractérisé en ce que l'on utilise en tant que vernis un vernis polysiloxane constitué de produits d'hydrolyse de trialcoxysilanes et/ou de produits de condensation partielle de trisilanols, dissous dans des alcools aliphatiques inférieurs et, en tant que pigment, un mélange d'un acide silicique préparé thermiquement à l'arc électrique aux environs de 3500°C, ou par hydrolyse à la flamme, et d'un acide silicique rendu hydrophobe, préparé thermiquement par réaction des groupes silanol, les acides siliciques étant présents au total en quantités de 0,5 à 15% en poids dans le vernis, et l'acide silicique rendu hydrophobe représentant de 5 à 40% en poids de l'acide silicique total.

2. Produit de revêtement selon la revendication 1, caractérisé en ce que le vernis polysiloxane contient du dioxyde de silicium colloïdal.

3. Produit de revêtement selon la revendication 1 ou 2, caractérisé en ce que la teneur en matière sèche du vernis polysiloxane, selon DIN 53 216, est de 20 à 30% et que celle-ci consiste en dioxyde de silicium colloïdal et en produits de condensation partielle de trisilanols.

4. Produit de revêtement selon l'une quelconque des revendications 1 à 3, caractérisé en ce que les acides siliciques ont une taille de particules ≤1 µm.

5. Procédé pour la préparation de produits de revêtement constitués de vernis polysiloxane et d'acides siliciques préparés thermiquement, selon l'une quelconque des revendications 1 à 4, caractérisé en ce que l'on broie les acides siliciques avec une partie du vernis jusqu'à ce que la granulométrie du mélange pâteux, mesurée à l'aide d'une jauge de broyage, ait atteint une valeur <1 µm, et on y ajoute ensuite le reste du vernis polysiloxane.

## Claims

1. Coating agent for delustering coatings on transparent surfaces made from glass and plastics, in particular for delustering coatings on viewing screens, made from a thermally curable lacquer and a finely divided pigment based on silicic acid, characterised in that a polysiloxane lacquer, consisting of hydrolysis products of trialkoxysilanes and/or partial condensates of trisilanols, dissolved in lower aliphatic alcohols is used as the lacquer, and a mixture of a silicic acid, prepared thermally in an arc at approximately 3,500°C or by flame hydrolysis at 550 to 1,250°C, and a hydrophobic silicic acid prepared thermally by reacting the silanol groups, is used as the pigment, wherein the silicic acids in total are present in the lacquer in amounts of 0.5 to 15 wt%, and the hydrophobic silicic acid accounts for 5 to 40 wt% of the total silicic acid.

2. Coating agent according to claim 1, characterised in that the polysiloxane lacquer contains colloidal silicon dioxide.

3. Coating agent according to claim 1 and 2, characterised in that the solids content of the polysiloxane lacquer is 20 to 30% in accordance with DIN 53216, and consists of colloidal silicon dioxide and partial condensates of trisilanols.

4. Coating agent according to claim 1 to 3, characterised in that the silicic acids have a grain size ≤1 µm.

5. Process for preparing coating agents from polysiloxane lacquers and thermally prepared silicic acids in accordance with claim 1 to 4, characterised in that the silicic acids are ground with some of the lacquer until the grittiness of the pasty mixture has reached a value of <1 µm, measured by means of a grindometer, and then the remainder of the polysiloxane lacquer is added.